# EUROPEAN PATENT APPLICATION

(11) **EP 3 654 628 A1**
(43) Date of publication of application: **20.05.2020**
(21) Application number: 19202431.3
(22) Date of filing: 10.10.2019
(51) Int. Cl.: H04N 1/407

(54) **IMAGE FORMING DEVICE, SHADING CORRECTION METHOD FOR IMAGE FORMING DEVICE, AND SHADING CORRECTION PROGRAM**

(30) Priority: 19.11.2018 JP 2018216764
(71) Applicant: KONICA MINOLTA, INC., Tokyo 100-7015 (JP)
(72) Inventor: Momose, Atsumi, Tokyo, 100-7015 (JP)
(74) Representative: Gille Hrabal

(57) **Abstract**

Accurate shading correction is performed even on a recording medium (7) in which cyclic density unevenness exists in a non-printing state.

An image forming device (1) includes: a conveyance unit (4) that conveys a recording medium (7); recording head units (5c, 5m, 5y, 5k) that print an image on the recording medium (7); a line sensor unit (6) that optically reads the recording medium (7); and a control unit (2) that prints a test chart (8) on a part of the recording medium (7), reads the test chart (8) by the line sensor unit (6), performs frequency analysis on an image obtained by reading the recording medium (7) in the non-printing state to calculate a cycle of density unevenness of the recording medium (7), analyzes an image of the test chart (8) in units of width based on the cycle, creates a shading correction table, and prints image data corrected on the basis of the shading correction table on the recording medium (7).

## Description

### Background

### Technological Field

The present invention relates to an image forming device, a shading correction method for the image forming device, and a shading correction program.

### Description of the Related art

In printing by inkjet printers, density unevenness occurs due to a difference in liquid amount between heads and a difference in ink droplet landing accuracy, and density unevenness also occurs in a head due to the difference in liquid amount or the landing accuracy. Therefore, in order to reduce density unevenness in printing, inkjet printers perform density correction processing such as shading correction. In shading correction, inkjet printers print a test chart on a recording medium, optically scan the test chart, and perform gradation correction for each arbitrary width.

However, when the recording medium has a density change, the density of the test pattern may be affected by the density change of the recording medium in the conventional density correction processing. JP 2009-233967 A discloses, in claim 1, an invention of a correction value acquisition method including in order to acquire an accurate density correction value: a step of forming a correction pattern on a medium; a step of reading each of a fabric portion of the medium and the correction pattern to acquire each of fabric portion density data of the fabric portion and correction pattern density data of the correction pattern; a step of performing filter processing on the correction pattern density data by a band limiting filter determined on the basis of the fabric portion density data; and a step of determining a density correction value for correcting density of an image on the basis of the correction pattern density data subjected to the filter processing.

The invention disclosed in JP 2009-233967 A analyzes the density unevenness of the recording medium in the fabric portion for removing noise based on the density unevenness of the recording medium in the fabric portion (non-printing state), and performs band limiting filter processing. However, there is a problem that it takes time to analyze density unevenness due the band limiting filter processing, and therefore it is impossible to quickly detect the print density.

Density unevenness due to a recording medium in a non-printing state is, for example, unevenness of the black belt transparency amount due to the density of the weave, unevenness of the cloth pretreatment agent application amount, and unevenness of shadow caused by the roughness of the recording medium, in printing with a cloth as the recording medium. In particular, in the case of cloth, since the density change for each gradation differs depending on the kind of cloth and pretreatment agent, it is desirable to perform shading correction for each cloth to be used in order to increase correction accuracy.

When performing print density detection using a camera unit, it is desirable to accurately analyze the print density to improve shading correction accuracy even if there is density unevenness due to a recording medium itself, and it is desirable to avoid complicated image analysis processing to be able to process quickly.

When printing a solid image having certain density on a cloth and detecting the density of the solid image, if there is unevenness due to the density of the weave, the degree of transparency of the black belt affects the density on a scanned image. Therefore, there is a possibility that the density cannot be detected correctly. That is, a portion with a large amount of transparency is detected as dark, and a portion with a small amount of transparency is detected as bright, resulting in a decrease in the accuracy of shading correction. Similarly, when performing shading correction on a recording medium in which cyclic density unevenness exists in the non-printing state, the accuracy of the shading correction may be reduced.

### Summary

Accordingly, the problem solved by the present invention is to accurately perform shading correction even on a recording medium having cyclic density unevenness in a non-printing state, in an image forming device, a shading correction method for the image forming device, and a shading correction program.

To achieve the abovementioned object, according to an aspect of the present invention, an image forming device reflecting one aspect of the present invention comprises: a conveyance unit that conveys a recording medium; a recording head unit that prints an image on the recording medium by an inkjet head that discharges ink from a plurality of nozzles; an image reading unit that optically reads the recording medium; and a control unit that selectively operates the plurality of nozzles of the inkjet head on the basis of test chart data to print a test chart on a part of the recording medium, reads a region on the recording medium on which the test chart is printed and a region in a non-printing state by the image reading unit, performs frequency analysis on an image obtained by reading the region in the non-printing state to calculate a cycle of density unevenness of the recording medium that occurs in the non-printing state, analyzes an image of the test chart in units of width based on the cycle, creates a shading correction table, and prints image data corrected on the basis of the shading correction table on the recording medium.

### Brief Description of the Drawings

The advantages and features provided by one or more embodiments of the invention will become more fully understood from the detailed description given hereinbelow and the appended drawings which are given by way of illustration only, and thus are not intended as a definition of the limits of the present invention:
Fig. 1 is a configuration diagram showing an outline of an inkjet recording device of an embodiment;
Fig. 2 is an external view of the inkjet recording device;
Fig. 3 is a configuration diagram of a recording head unit;
Fig. 4 is a diagram showing operation of a line sensor unit;
Fig. 5 is a graph showing a relationship between an input gradation and a printing result for each material of a cloth;
Fig. 6 is a diagram showing unevenness in the belt transparency state due to weave of cloth;
Fig. 7 is a schematic diagram of transparency of cloth placed on a black belt;
Fig. 8 is a schematic diagram of transparency of cloth placed on a black belt;
Fig. 9 is a diagram showing an example of a shading correction chart printed on a recording medium;
Fig. 10 is a graph showing an example of a frequency analysis result for a non-printing region of a recording medium;
Fig. 11 is a flowchart showing shading correction processing;
Fig. 12 is a flowchart showing a table creation width calculation processing;
Fig. 13 is a flowchart showing printing processing on a recording medium;
Fig. 14 is a flowchart showing shading correction processing in a first modification;
Fig. 15 is an example of masks having gradation; and
Fig. 16 is a flowchart showing printing processing on a recording medium in a second modification.

### Detailed Description of Embodiments

Hereinafter, one or more embodiments of the present invention will be described with reference to the drawings. However, the scope of the invention is not limited to the disclosed embodiments. Note that, in the following description, what have the same function and configuration are attached with the same reference numeral, and description thereof is omitted. In the following description, the term "image data" refers to, for example, data of the entire image formed on one recording medium, and the term "pixel" refers to one dot data constituting "image data".

The inkjet recording device of the present embodiment calculates the density unevenness cycle depending on the recording medium itself, and makes the unit of the shading correction table creation width wider than the density unevenness cycle. At this time, the inkjet recording device performs frequency analysis of the recording medium to calculate an optimum density detection range.

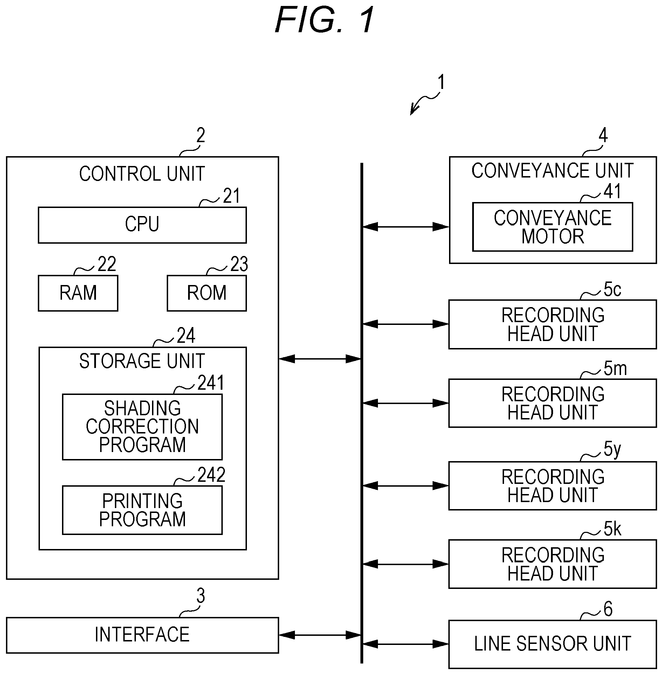

Fig. 1 is a configuration diagram showing an outline of an inkjet recording device 1 of the present embodiment.

The inkjet recording device 1 is an image forming device that forms an image on a recording medium. The inkjet recording device 1 includes recording head units 5c, 5m, 5y, 5k, a line sensor unit 6, a conveyance unit 4, a control unit 2, and an interface 3, which are connected by an internal bus.

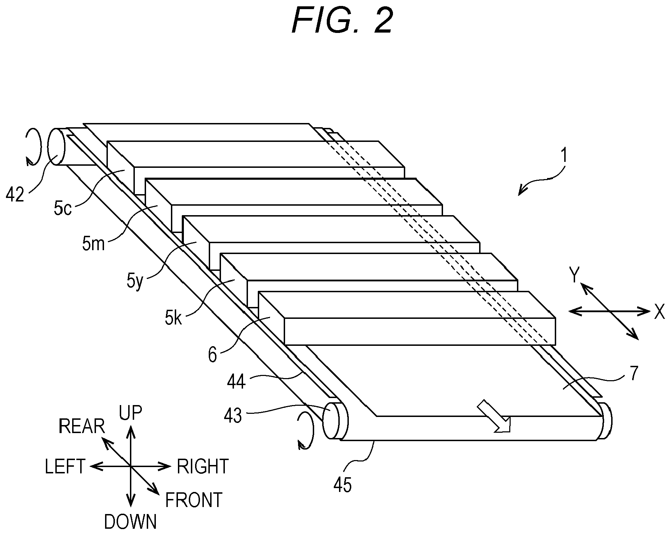

The conveyance unit 4 includes a conveyance motor 41. The conveyance motor 41 is controlled to drive by the control unit 2, and conveys a belt 45 and a recording medium 7 by rotating conveyance rollers 42, 43 shown in Fig. 2 in a predetermined direction.

The control unit 2 controls each unit of the inkjet recording device 1, and includes a central processing unit (CPU) 21, a random access memory (RAM) 22, a read only memory (ROM) 23, and a storage unit 24.

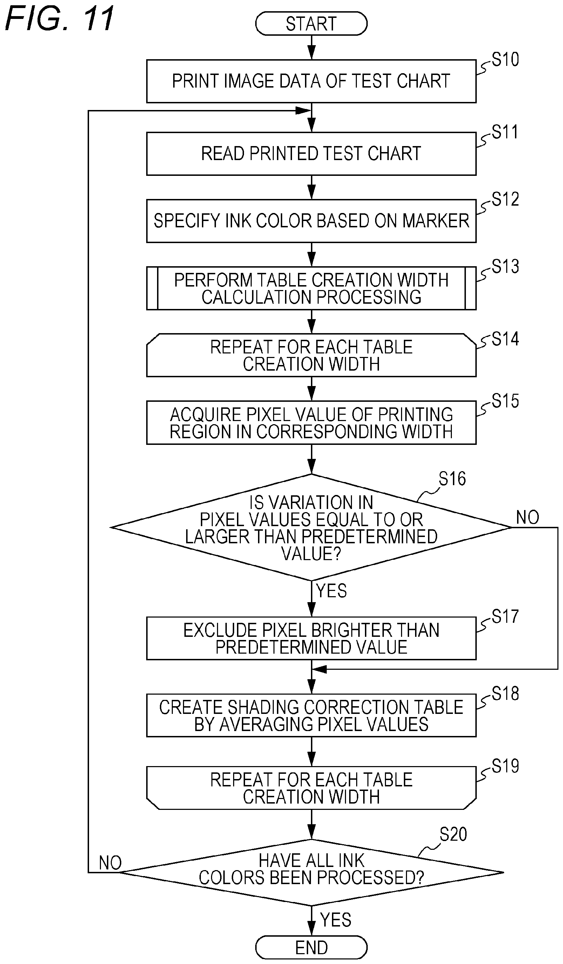

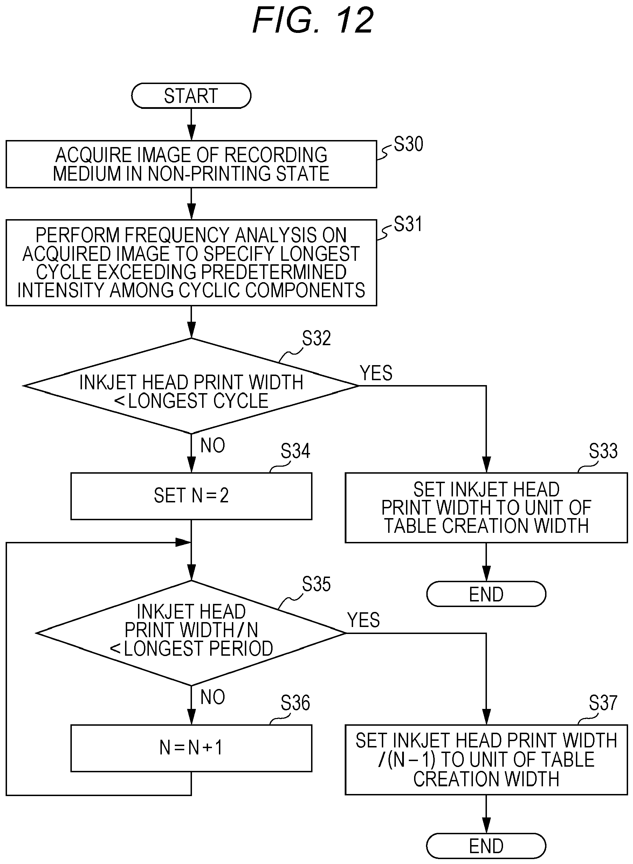

The CPU 21 reads out a shading correction program 241 stored in the storage unit 24, develops the shading correction program 241 in the work region in the RAM 22, and executes shading correction processing (see Figs. 11 and 12).

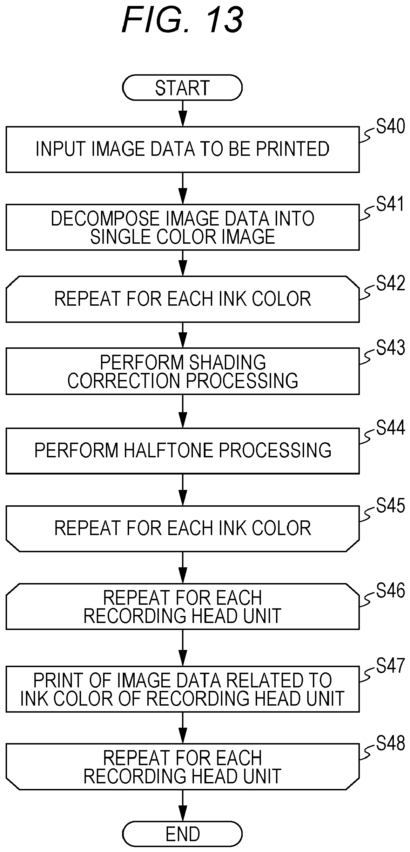

Thereafter, the CPU 21 reads out a printing program 242 stored in the storage unit 24, develops the printing program 242 in the work region in the RAM 22, and executes printing processing (see Fig. 13).

The RAM 22 is a volatile memory, and is used as, for example, a program storage region for developing a processing program or the like executed by the CPU 21, or as a data storage region for storing a processing result or the like generated when input data or the processing program is executed.

The ROM 23 is a non-volatile memory, and the storage unit 24 is, for example, a hard disk or a flash memory. The ROM 23 and the storage unit 24 store a system program that can be executed by the inkjet recording device 1, various processing programs that can be executed by the system program, various types of data that are used when the various processing programs are executed, and the like.

The interface 3 is a network interface controller (NIC), for example, and is connected to a network (not shown). The control unit 2 receives image data from an external device (not shown) via the interface 3, and prints the image data on a recording medium.

The recording head unit 5c prints an image with cyan (C) ink on a recording medium. The recording head unit 5m prints an image with magenta (M) ink on a recording medium. The recording head unit 5y prints an image with yellow (Y) ink on a recording medium. The recording head unit 5k prints an image with black (K) ink on a recording medium. The line sensor unit 6 is an image reading unit that optically reads a recording medium.

Fig. 2 is an external view of the inkjet recording device 1.

As shown in Fig. 2, the inkjet recording device 1 includes a belt 45 and a platen 44 that supports the recording medium 7. In order to convey the recording medium 7, the conveyance roller 42 is provided behind the platen 44, and the conveyance roller 43 is provided in front of the platen 44. The black belt 45 is stretched around the conveyance rollers 42, 43. When the conveyance rollers 42, 43 are driven to rotate by the conveyance motor 41, the belt 45 rotates in the direction of the arrow, and the recording medium 7 fixed on the belt 45 is conveyed in a state of being supported by the platen 44 from the rear to the front. Note that the recording medium 7 of the present embodiment is a cloth.

In the following description, the conveyance direction of the recording medium 7 is referred to as "Y direction", and the direction orthogonal to the conveyance direction is referred to as "X direction". The Y direction and the X direction are directions on the horizontal plane.

Above the platen 44 and the belt 45, recording head units 5c, 5m, 5y, 5k are provided from the upstream side to the downstream side in the Y direction. Each of the recording head units 5c, 5m, 5y, 5k includes a plurality of inkjet heads that discharge ink from a plurality of nozzles, and prints an image on the recording medium 7.

The recording head units 5c, 5m, 5y, 5k are arrayed in a direction (X direction) orthogonal to the conveyance direction (Y direction) of the recording medium 7. The recording head unit 5c discharges cyan (C) ink toward the recording medium 7. The recording head unit 5m discharges magenta (M) ink toward the recording medium 7. The recording head unit 5y discharges yellow (Y) ink toward the recording medium 7. The recording head unit 5k discharges black (K) ink toward the recording medium 7. Note that the array order of the recording head units 5c, 5m, 5y, 5k can be arbitrarily set.

Hereinafter, when the recording head units 5c, 5m, 5y, 5k are not distinguished, they are simply referred to as the recording head unit 5.

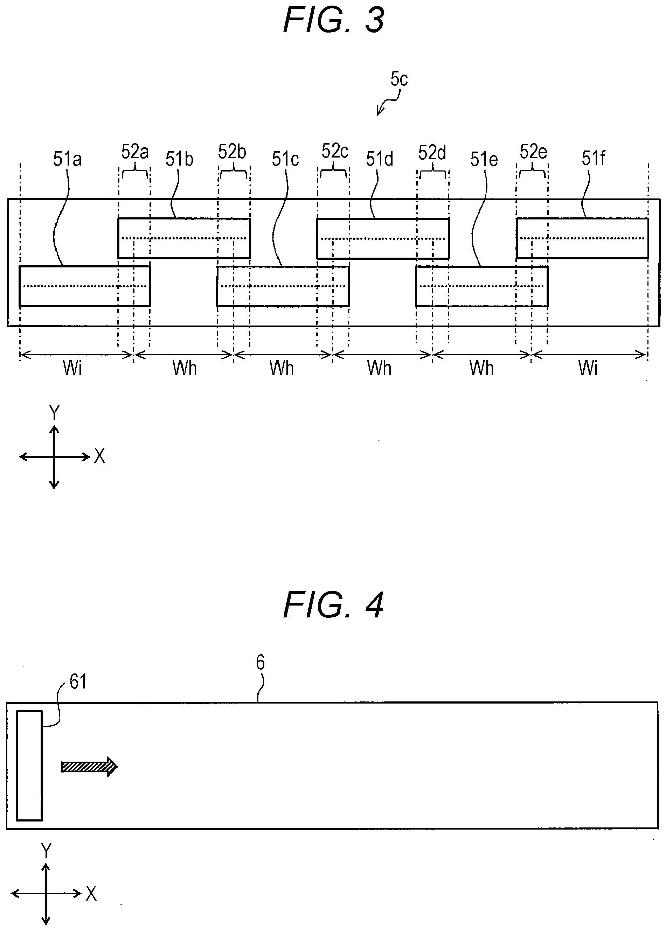

Furthermore, the line sensor unit 6 as an image reading unit is provided on the downstream side of the recording head unit 5k provided above the platen 44 and the belt 45. The line sensor unit 6 extends in the X direction, and can optically read an image formed on the recording medium 7 to specify a position where the image is formed. The configuration and operation of the line sensor unit 6 will be described with reference to Fig. 4 described later.

Fig. 3 is a configuration diagram of the recording head unit 5c.

When the recording head unit 5c is viewed in plan from below, as shown in Fig. 3, six inkjet heads 51a to 51f are arrayed in a staggered manner along the X direction. Note that the number of inkjet heads is not limited to this, and can be set as appropriate. In each of the inkjet heads 51a to 51f, a large number of nozzles are formed in rows at predetermined intervals.

That is, each of the inkjet heads 51a to 51f has a nozzle row. The number of nozzles can be set arbitrarily. The number of nozzle rows is not limited to one, and may be two or more. Each of the inkjet heads 51a to 51f includes, for example, a discharge means such as a piezo element (piezoelectric element) in the inside thereof, and by the operation of this discharge means, the discharge of each ink droplet from each nozzle can be independently controlled.

The colors of ink used in the present embodiment are four of cyan (C), magenta (M), yellow (Y), and black (K), but is not limited to this, and other colors such as light cyan (LC), light magenta(LM), and light yellow (LY) can also be used. In this case, a recording head unit corresponding to each color is further provided.

Each of the inkjet heads 51a, 51b has n nozzles. The connection portion 52a is configured such that a predetermined number of nozzles at the right end of the nozzle row of the inkjet head 51a and a predetermined number of nozzles at the left end of the nozzle row of the inkjet head 51b overlap each other in the Y direction. However, in practice, an attachment error of the inkjet heads 51a, 51b occurs, so that the number of overlapping nozzles is not necessarily a predetermined number. For this reason, when the product is shipped, the overlapping position of the nozzles is checked and registered in advance, thereby preventing the ink droplet discharge position from deviating during image formation.

The connection portion 52b is a portion where the nozzle rows of the inkjet heads 51b, 51c overlap. The connection portion 52c is a portion where the nozzle rows of the inkjet heads 51c, 51d overlap. The connection portion 52d is a portion where the nozzle rows of the inkjet heads 51d, 51e overlap. The connection portion 52e is a portion where the nozzle rows of the inkjet heads 51e, 51f overlap. These connection portions 52b to 52e are similar to the connection portion 52a.

The interval between the central portion of the connection portion 52a and the central portion of the connection portion 52b is Wh. This is the actual print width of the inkjet head 51b. The interval between the central portion of the connection portion 52b and the central portion of the connection portion 52c is Wh. This is the actual print width of the inkjet head 51c. The interval between the central portion of the connection portion 52c and the central portion of the connection portion 52d is Wh. This is the actual print width of the inkjet head 51d. The interval between the central portion of the connection portion 52d and the central portion of the connection portion 52e is Wh. This is the actual print width of the inkjet head 51e.

Note that the actual print width of the inkjet head 51a is the interval Wi from the left end to the central portion of the connection portion 52a. The actual print width of the inkjet head 51f is the interval Wi from the central portion of the connection portion 52e to the right end. However, in the present embodiment, the print width of the inkjet heads 51a to 51f is considered as Wh.

Hereinafter, when the inkjet heads 51a to 51f are not particularly distinguished, they are simply referred to as the inkjet head 51.

Note that, in the present embodiment, for ease of explanation, an example in which a predetermined number of nozzles are overlapped is shown and described. However, the number of overlapping nozzles is not limited to the above, and can be arbitrarily set.

One of the two nozzles is a nozzle that discharges ink droplets at the connection portions 52a to 52e. Which nozzle is to discharge ink droplets can be set as appropriate according to the characteristics of the nozzle and ink.

Note that, since the recording head units 5m, 5y, 5k have a similar configuration to the recording head unit 5c, only the recording head unit 5c will be described in the following description, and the same reference numerals are used for the recording head units 5m, 5y, 5k and the description thereof is omitted.

Note that the recording head units 5c, 5m, 5y, 5k are not limited to this, and may be configured by a single inkjet head 51.

Fig. 4 is a diagram showing a schematic configuration and operation of the line sensor unit 6.

The line sensor unit 6 includes a line sensor 61 whose longitudinal direction is the Y direction. That is, the line sensor 61 is arranged so that the conveyance direction of the recording medium 7 is the longitudinal direction. The line sensor unit 6 optically reads the surface of the recording medium 7 while scanning the line sensor 61 in the X direction by an actuator (not shown).

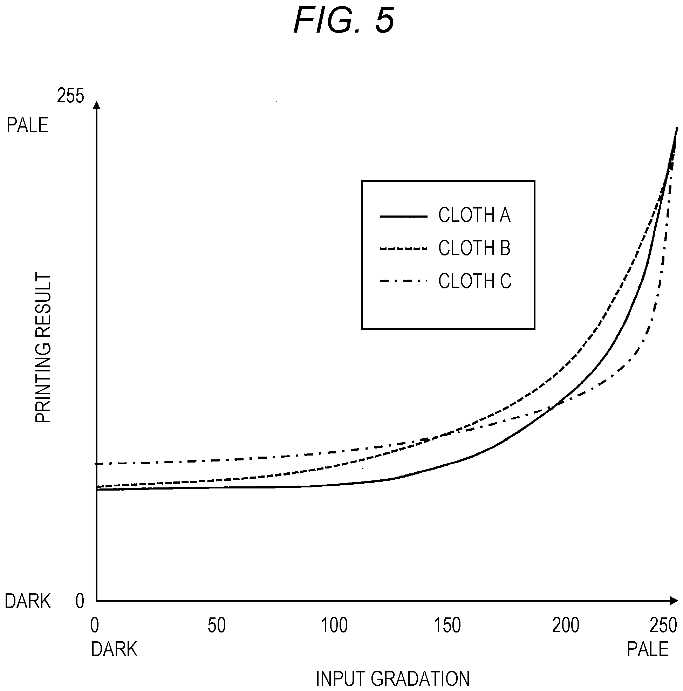

Fig. 5 is a graph showing a relationship between an input gradation and a printing result for each material of cloth.

The horizontal axis of the graph indicates the input gradation to the inkjet head 51 by numerical values from 0 to 255. The vertical axis of the graph indicates the gradation of the printing result with gradation from 0 to 255. The solid line indicates the relationship between the input gradation of the cloth A and the printing result. This cloth A has almost no change in the printing result when the input gradation is from 0 to 80.

The broken line indicates the relationship between the input gradation of the cloth B and the printing result. The cloth B continues to change without saturation of the density of the printing result even in the dark gradation.

The alternate long and short dash line indicates the relationship between the input gradation of the cloth C and the printing result. In the cloth C, the density change of the printing result at the bright gradation is abrupt.

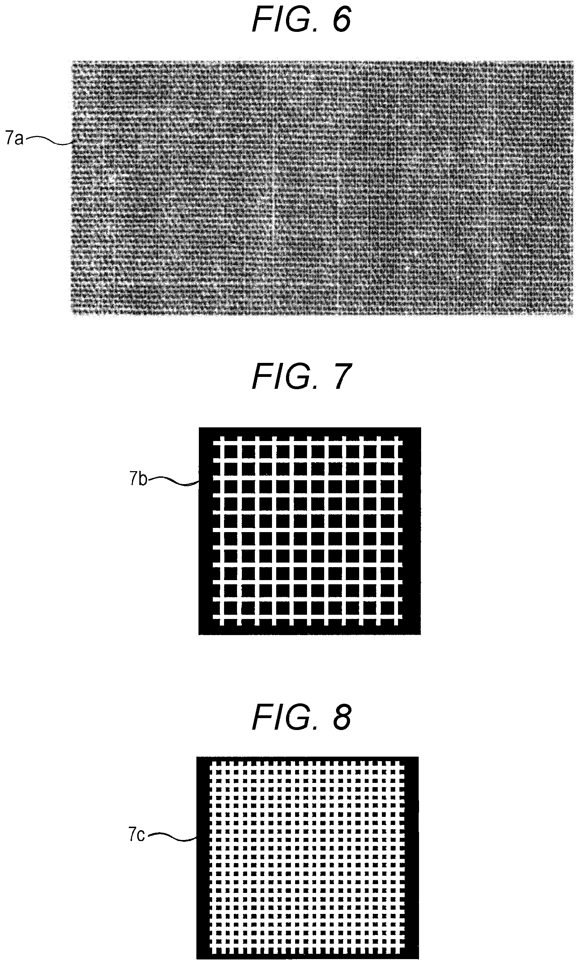

Fig. 6 is a diagram showing unevenness in the belt transparency state due to weave of cloth 7a.

The cloth 7a has a structure with a gap between yarns, and is conveyed and printed in a state of being stuck to a black belt with a belt base paste. Factors causing the density of the weave of the cloth 7a include the adjustment of the loom, the difference in the thickness of the yarn itself, the position of the yarn when the pretreatment agent is applied, the pretreatment agent application amount, and the elongation of the cloth. Furthermore, the unevenness as shown in the image in Fig. 6 also occurs due to the difference in height due to the uneven thickness of the belt base paste and the force applied when the belt is adhered.

When density detection is performed by printing a solid image of a predetermined density on cloth, if the cloth has uneven weave density, the degree of transparency of the black belt affects the density on the scanned image, and the density cannot be detected correctly. In the cloth, a portion with a large amount of transparency is detected as dark and a portion with a small amount of transparency is detected as bright. Therefore, the accuracy of shading correction is reduced.

Fig. 7 is a schematic diagram of transparency of cloth 7b placed on a black belt. Fig. 8 is a schematic diagram of transparency of cloth 7c placed on a black belt. Here, the cloth 7c has a denser weave than the cloth 7b.

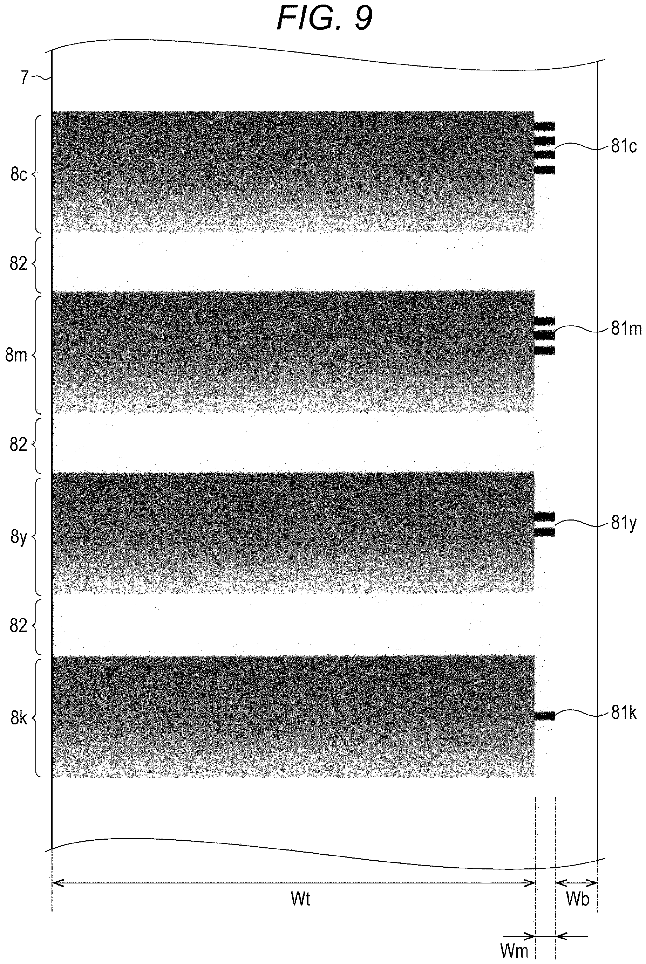

Fig. 9 is a diagram showing an example of test charts 8c to 8k printed on the recording medium 7.

The recording medium 7 has test charts 8c to 8k printed with a width Wt from the left end. A test chart 8c is printed by cyan (C) ink by the recording head unit 5c. On the right side of the test chart 8c, a four-line marker 81c is printed, indicating that the chart relates to the recording head unit 5c.

A test chart 8m is printed with magenta (M) ink by a recording head unit 5m. On the right side of the test chart 8m, a three-line marker 81m is printed, indicating that the chart relates to the recording head unit 5m. A non-printing region 82 exists between the test chart 8c and the test chart 8m.

A test chart 8y is printed by the recording head unit 5y with yellow (Y) ink. On the right side of the test chart 8y, a two-line marker 81y is printed, indicating that the chart relates to a recording head unit 5y. A non-printing region 82 exists between the test chart 8m and the test chart 8y.

A test chart 8k is printed by the recording head unit 5k with black (K) ink. On the right side of the test chart 8k, a single-line marker 81k is printed, indicating that the chart relates to the recording head unit 5k. A non-printing region 82 exists between the test chart 8y and the test chart 8k.

Note that, when the test charts 8c, 8m, 8y, 8k are not distinguished, they are simply referred to as the test chart 8. When the markers 81c, 81m, 81y, 81k are not distinguished, they are simply referred to as the marker 81.

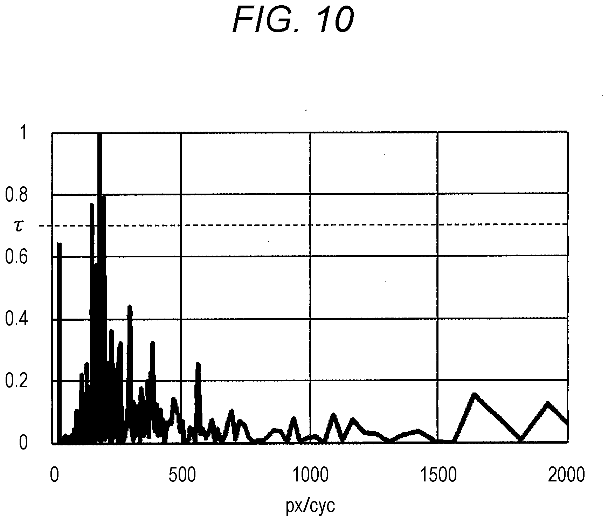

Fig. 10 is a graph showing an example of a frequency analysis result for the non-printing region 82 of the recording medium 7.

The horizontal axis of the graph represents pixel/cycle, and the vertical axis represents intensity. According to this graph, it can be seen that there is a peak whose intensity is stronger than a threshold τ in 150 to 200 [pixels] per cycle. Therefore, it is necessary to sample with a longer cycle. Sampling is performed with a width longer than the portion where the intensity is stronger than the threshold τ, so that the influence of density unevenness due to the recording medium 7 can be eliminated.

Note that there is a slightly strong peak at 10 [pixels] per cycle. This peak corresponds to the diameter of the yarn constituting the recording medium 7.

Hereinafter, a processing procedure for executing image formation performed in the inkjet recording device 1 will be described. Image formation in the present embodiment is realized by the functions of the units shown in Fig. 1.

Note that, in the present embodiment, the control unit 2 realizes the functions of the units described below by software processing. However, the function may be realized by including a circuit for functioning these units, a dedicated processor, or the like.

Fig. 11 is a flowchart showing shading correction processing.

In the shading correction processing, the control unit 2 prints image data for the shading correction chart on the recording medium 7 while sequentially conveying the recording medium 7 (S10). As a result, the test charts 8c, 8m, 8y, 8k are formed on the recording medium 7 as shown in Fig. 9.

The control unit 2 conveys the recording medium 7 until the test chart 8 is located immediately below the line sensor unit 6, and reads the printed test chart 8 (S11). The control unit 2 specifies the ink color on the basis of the marker 81 (S12). Note that, when the marker 81 is a single line, the ink color is black. When the marker 81 is a two-line, the ink color is yellow. When the marker 81 is three-line, the ink color is magenta. When the marker 81 is four-line, the ink color is cyan.

Next, the control unit 2 performs table creation width calculation processing shown in Fig. 12 on the basis of the scan data and ink color information of the test chart 8 (S13).

Hereinafter, the table creation width calculation processing will be described with reference to the flowchart shown in Fig. 12.

First, the control unit 2 conveys the recording medium 7 until the non-printing region 82 is located immediately below the line sensor unit 6, and acquires an image of the recording medium 7 in the non-printing state (S30). Note that the present invention is not limited to this, and an image of the recording medium 7 before the test chart 8 is printed may be acquired.

The control unit 2 performs frequency analysis on the image of the recording medium 7 in the non-printing state (see Fig. 6), obtains the intensity distribution of the cyclic component as shown in Fig. 10, and specifies the longest cycle exceeding the predetermined intensity (S31).

Next, the control unit 2 compares the print width Wh (see Fig. 3) of the inkjet head 51 with the longest cycle (S32). If the longest cycle is longer than the print width Wh of the inkjet head 51 (Yes), the control unit 2 sets the print width Wh of the inkjet head 51 as a unit of table creation width (S33), and ends the processing of Fig. 12. As a result, it is possible to remove the influence of density unevenness due to variations in the inkjet head 51.

In step S32, if the print width Wh of the inkjet head 51 is equal to or longer than the longest cycle (No), the control unit 2 proceeds to the processing of step S34.

The control unit 2 sets the variable N to 2 (S34), and compares the print width Wh of the inkjet head 51 divided by N with the longest cycle (S35). If the longest cycle is larger (Yes), the control unit 2 sets the result obtained by dividing the print width Wh of the inkjet head 51 by (N-1) as the unit of the table creation width (S37), and ends the processing of Fig. 12. Here, since the variable N is 2 or more, the result obtained by dividing the print width Wh by (N-1) is the result obtained by dividing the print width by a predetermined natural number. As a result, it is possible to remove the influence of density unevenness due to the recording medium 7, and also remove the influence of density unevenness due to variations in the inkjet head 51.

In step S35, if the result obtained by dividing the print width Wh of the inkjet head 51 by N is larger (No), the control unit 2 adds 1 to the variable N (S36), and returns to the processing of step S35.

Density unevenness easily occurs at the print width Wh of the inkjet head 51. This is due to differences in liquid amount, landing errors, attachment accuracy, and the like for each inkjet head 51. Therefore, when the longest cycle of the cyclic component of the recording medium 7 in the non-printing state is larger than the print width Wh of the inkjet head 51, the unit of the table creation width is the print width Wh Moreover, when the longest cycle is smaller than the print width Wh of the inkjet head 51, the unit of the table creation width is 1/N of the print width Wh and larger than the longest cycle.

Description is continued returning to Fig. 11. In steps S14 to S19, the control unit 2 repeats the processing for each table creation width with respect to the entire width of the recording medium 7.

The control unit 2 acquires pixels in the printing region with this width (S15), and determines whether or not the variation in pixel values is equal to or larger than a predetermined value (S16). If the variation in pixel value is equal to or larger than the predetermined value (Yes), the control unit 2 excludes pixels brighter than the predetermined value (S17), and proceeds to step S18. If the variation of the pixel value is smaller than the predetermined value (Yes), the control unit 2 proceeds to step S18.

Pixels brighter than a predetermined value are white streaks caused by defective printing due to nozzle failure, bending, or abnormal nozzle landing. The term "nozzle failure" refers to a state in which ink cannot be discharged from the nozzle. By averaging without such pixels, the accuracy of the shading correction table can be improved.

In step S18, the control unit 2 creates a shading correction table by averaging the pixel values in one horizontal row of the test chart 8 for each table creation width.

In step S19, if the processing for each table creation width for the entire width of the recording medium 7 has not been completed, the control unit 2 returns to step S14. When this processing ends, the control unit 2 proceeds to step S20.

In step S20, the control unit 2 determines whether all ink colors have been processed. If there is an unprocessed ink color (No), the control unit 2 returns to the processing of step S11, and if all the ink colors have been processed (Yes), the control unit 2 ends the processing of Fig. 11.

The target value when creating the correction table is the average of the whole or the average value excluding abnormal values (discharge failure, printing failure, cloth edge, dirt, and the like).

Fig. 13 is a flowchart showing printing processing on the recording medium 7.

The control unit 2 accepts input of image data to be printed (S40), and decomposes this image data into single-color image data (S41).

In steps S42 to S45, the control unit 2 repeats the processing for each ink color.

The control unit 2 performs correction processing based on the shading correction table corresponding to the ink color on the single color image data corresponding to the ink color (S43), and further performs halftone processing (S44).

In step S45, if there is an ink color that has not yet been processed, the control unit 2 returns to step S42, and if the processing for all ink colors is completed, the control unit 2 proceeds to step S46.

In steps S46 to S48, the control unit 2 repeats the processing for each recording head unit 5.

In step S47, the control unit 2 prints image data related to the ink color of the recording head unit 5.

In step S48, if there is a recording head unit 5 that has not yet been processed, the control unit 2 returns to step S46, and if the processing of all the recording head units 5 is completed, the control unit 2 ends the processing in Fig. 13.

### «First Modification»

In the first modification, a shading correction table is created by excluding pixels having abnormal values. As a result, the accuracy of the shading correction table can be improved.

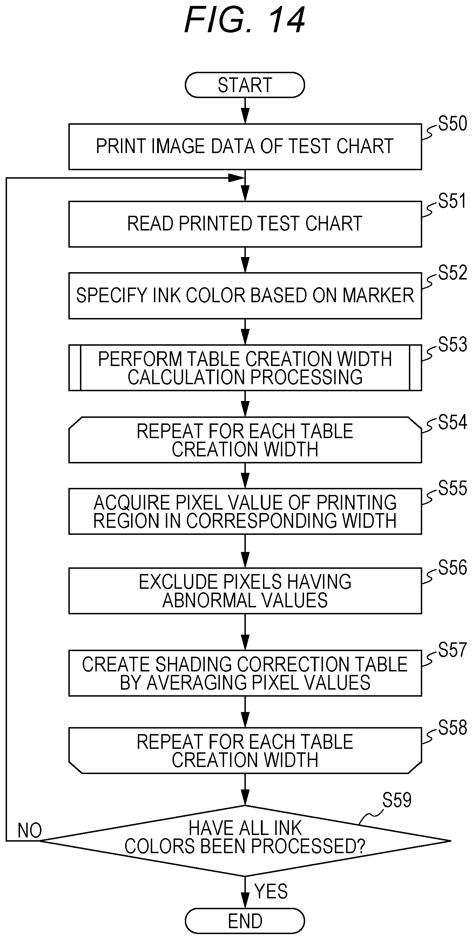

Fig. 14 is a flowchart showing shading correction processing in the first modification.

In the shading correction processing, the control unit 2 prints image data for the test chart 8 on the recording medium 7 while sequentially conveying the recording medium 7 (S50). As a result, the test charts 8c, 8m, 8y, 8k are formed on the recording medium 7 as shown in Fig. 9.

The control unit 2 conveys the recording medium 7 until the test chart 8 is located immediately below the line sensor unit 6, and reads the printed test chart 8 (S51). The control unit 2 specifies the ink color on the basis of the marker 81 (S52).

Next, the control unit 2 performs table creation width calculation processing shown in Fig. 12 on the basis of the scan data and ink color information of the test chart 8 (S53).

In steps S54 to S58, the control unit 2 repeats the processing for each table creation width with respect to the entire width of the recording medium 7.

The control unit 2 acquires pixels in the printing region with this width (S55), and excludes pixels with abnormal values (S56). By averaging excluding pixels with abnormal values, the accuracy of the shading correction table can be improved. A pixel with an abnormal value is, for example, a pixel in a region including discharge failure due to nozzle failure, a pixel in a region including printing failure due to a nozzle landing abnormality, a pixel in a region including printing failure due to a liquid amount abnormality, a pixel in a region including dirt, or a pixel in a region including an end portion of the recording medium.

In step S57, the control unit 2 creates a shading correction table by averaging the pixel values in one horizontal row of the test chart 8 for each table creation width.

In step S58, if the processing for each table creation width for the entire width of the recording medium 7 has not been completed, the control unit 2 returns to step S54. When this processing ends, the control unit 2 proceeds to step S59.

In step S59, the control unit 2 determines whether all ink colors have been processed. If there is an unprocessed ink color (No), the control unit 2 returns to the processing of step S51, and if all the ink colors have been processed (Yes), the control unit 2 ends the processing of Fig. 14.

### «Second Modification»

In the second modification, correction is performed by applying a gradation mask to the connection of shading correction. As a result, the connection of shading correction can be made inconspicuous.

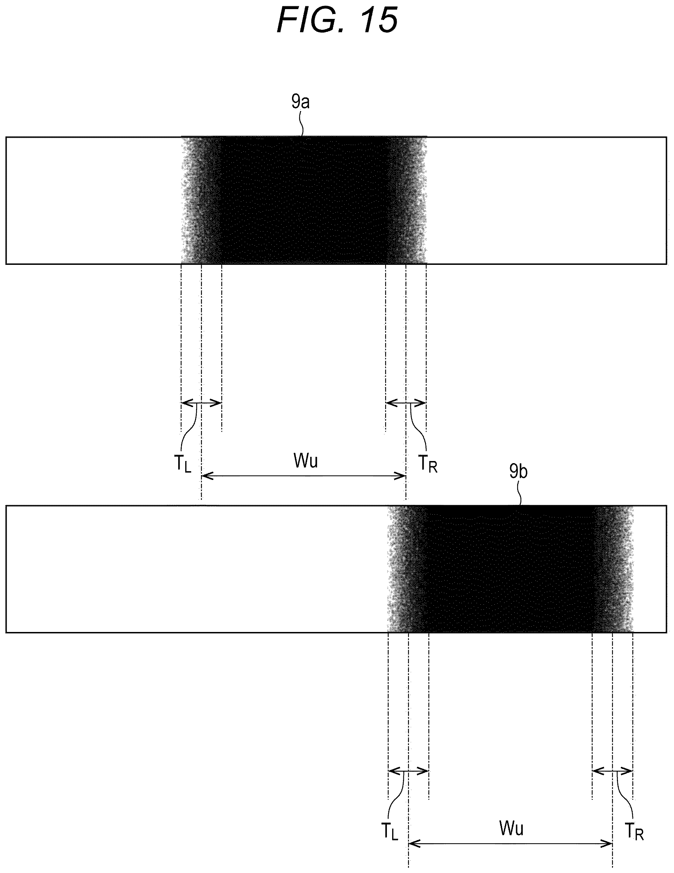

Fig. 15 is an example of masks 9a, 9b having gradation.

The mask 9a has a connection between a region T_{L} and a region T_{R} on both sides of a table creation width Wu. In the mask 9a, the white portion is a mask region where no shading correction is applied, and the black portion is a non-mask region where shading correction is applied.

The entire left side from the left region T_{L} of the mask 9a is a mask region where no shading correction is applied. In the region T_{L}, the mask frequency decreases from left to right. The entire region from the right end of the region T_{L} to the left end of the region T_{R} is a non-mask region where shading correction is applied.

In the region T_{R} on the right side of the mask 9a, the mask frequency increases from left to right. The entire right side from the right end of the region T_{R} is a mask region where no shading correction is applied.

The entire left side from the left region T_{L} of the mask 9b is a mask region where no shading correction is applied. In the region T_{L}, the mask frequency decreases from left to right. The entire region from the right end of the region T_{L} to the left end of the region T_{R} is a non-mask region where shading correction is applied. Moreover, the region T_{L} on the left side of the mask 9b is obtained by inverting the region T_{R} on the right side of the mask 9a. This is similar in the mask on the right side of the mask 9b. As a result, the pixels in the image region can be distributed to any table, and shading correction can be applied throughout.

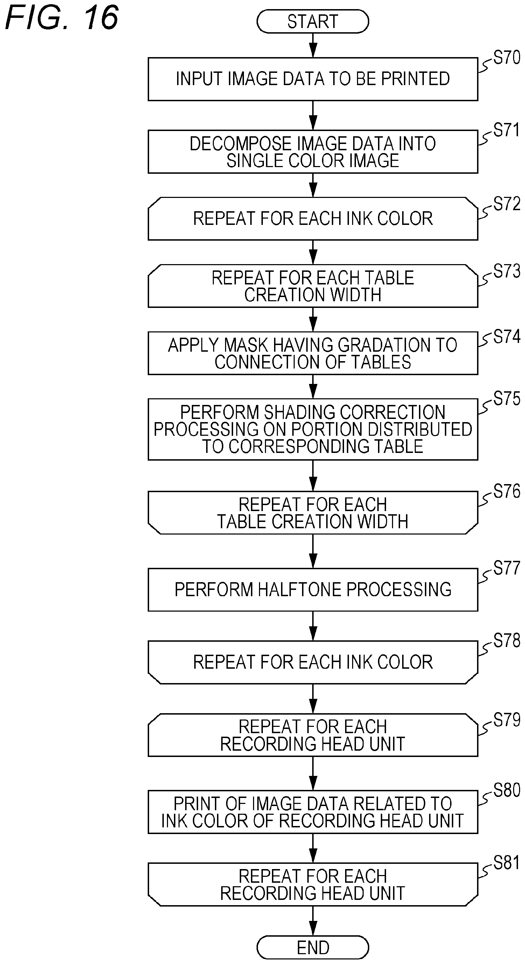

Fig. 16 is a flowchart showing printing processing on a recording medium in the second modification.

The control unit 2 accepts input of image data to be printed (S70), and decomposes this image data into single-color image data (S71).

In steps S72 to S78, the control unit 2 repeats the processing for each ink color.

In steps S73 to S76, the control unit 2 repeats the processing for each table creation width with respect to the width of the recording medium 7.

The control unit 2 applies a mask having gradation on the connection of the table creation widths (S74). As a result, the control unit 2 can distribute the pixels in the image region to any table. Then, the control unit 2 applies shading correction processing on the portion distributed to this table (S75). The control unit 2 can make the connection of the shading correction inconspicuous by distributing the pixels in the image region with a mask having gradation.

In step S76, if the processing for each table creation width is not completed, the control unit 2 returns to step S73, and if the processing for each table creation width is completed, the control unit 2 proceeds to step S77.

In step S77, the control unit 2 performs halftone processing.

In step S78, if there is an ink color that has not yet been processed, the control unit 2 returns to step S72, and if the processing for all ink colors is completed, the control unit 2 proceeds to step S79.

In steps S79 to S81, the control unit 2 repeats the processing for each recording head unit 5.

In step S80, the control unit 2 prints image data related to the ink color of the recording head unit 5.

In step S81, if there is a recording head unit 5 that has not yet been processed, the control unit 2 returns to step S79, and if the processing of all the recording head units 5 is completed, the control unit 2 ends the processing in Fig. 16.

### (Modification)

The present invention is not limited to the above embodiment, and can be modified without departing from the spirit of the present invention. For example, there are the following (a) to (c).
(a) The recording medium on which cyclic density unevenness exists in the non-printing state is not limited to cloth, and may be ruled line paper or graph paper, for example.
(b) The number of recording head units is not limited to four.
(c) Whether or not to perform halftone processing on single-color image data in printing is arbitrary.

According to an embodiment of the present invention, accurate shading correction can be performed even on a recording medium in which cyclic density unevenness exists in a non-printing state.

Although embodiments of the present invention have been described and illustrated in detail, the disclosed embodiments are made for purposes of illustration and example only and not limitation. The scope of the present invention should be interpreted by terms of the appended claims.

## Claims

1. An image forming device (1) comprising:
a conveyance unit (4) that conveys a recording medium (7);
a recording head unit (5) that prints an image on the recording medium (7) by an inkjet head (51) that discharges ink from a plurality of nozzles;
an image reading unit (6) that optically reads the recording medium (7); and
a control unit (2) that selectively operates the plurality of nozzles of the inkjet head (51) on the basis of test chart data to print a test chart (8) on a part of the recording medium (7), reads a region on the recording medium (7) on which the test chart (8) is printed and a region in a non-printing state by the image reading unit (6),
performs frequency analysis on an image obtained by reading the region in the non-printing state to calculate a cycle of density unevenness of the recording medium (7) that occurs in the non-printing state, analyzes an image of the test chart (8) in units of width based on the cycle, creates a shading correction table, and
prints image data corrected on the basis of the shading correction table on the recording medium (7).

2. The image forming device (1) according to claim 1,
wherein the control unit (2) performs the frequency analysis with a print margin of the test chart (8) in the image obtained by reading the recording medium (7), as the recording medium (7) in the non-printing state to calculate the cycle of the density unevenness of the recording medium (7) that occurs in the non-printing state.

3. The image forming device (1) according to claim 1 or 2,
wherein the control unit (2) creates the shading correction table in units of width longer than the longest cycle exceeding predetermined intensity among cyclic components of the image obtained by reading the test chart (8).

4. The image forming device (1) according to claim 1 or 2,
wherein, in the recording head unit (5), the plurality of inkjet heads (51) are arrayed in a direction orthogonal to a conveyance direction of the recording medium (7), and
when the longest cycle exceeding predetermined intensity among cyclic components of the image obtained by reading the test chart (8) is narrower than a print width of the inkjet head (51), the control unit (2) creates the shading correction table in units of the print width of the inkjet head (51).

5. The image forming device (1) according to claim 1 or 2,
wherein, in the recording head unit (5), the plurality of inkjet heads (51) are arrayed in a direction orthogonal to a conveyance direction of the recording medium (7), and
the control unit (2) creates the shading correction table in units of width being longer than the longest cycle exceeding predetermined intensity among cyclic components of the image obtained by reading the test chart (8), and obtained by dividing a print width of the inkjet head (51) by a predetermined natural number.

6. The image forming device (1) according to claim 1 or 2,
wherein, in the recording head unit (5), the plurality of inkjet heads (51) are arrayed in a direction orthogonal to a conveyance direction of the recording medium (7), and
the control unit (2) creates the shading correction table in units of width being longer than the longest cycle exceeding predetermined intensity among cyclic components of the image obtained by reading the test chart (8), and narrower than a print width of the inkjet head (51).

7. The image forming device (1) according to claim 1 or 2,
wherein, in the recording head unit (5), the plurality of inkjet heads (51) are arrayed in a direction orthogonal to a conveyance direction of the recording medium (7), and
when the longest cycle exceeding predetermined intensity among cyclic components of the image obtained by reading the test chart (8) is equal to or larger than a print width of the inkjet head (51), the control unit (2) creates the shading correction table in the print width of the inkjet head (51).

8. The image forming device (1) according to claim 1,
wherein the control unit (2) selectively operates the plurality of nozzles of the inkjet head (51) on the basis of the test chart data to print the test chart (8) and a marker (81) on the recording medium (7), reads the test chart (8) and the marker (81) printed on the recording medium (7) by the image reading unit (6),
specifies a color of ink used on the basis of the marker (81), and creates the shading correction table for the color.

9. The image forming device (1) according to claim 1 or 2,
wherein when the control unit (2) reads the test chart (8) printed on the recording medium (7), the control unit (2) performs the frequency analysis on an image of the recording medium (7) in the non-printing state to calculate the cycle of the density unevenness of the recording medium (7) that occurs in the non-printing state, and creates the shading correction table in which pixel values of the image obtained by reading the test chart (8) are averaged, in a width based on the cycle.

10. The image forming device (1) according to claim 9,
wherein, when the control unit (2) creates the shading correction table in which the pixel values are averaged, in the width based on the cycle, if pixels within a range to be averaged have a pixel value variation of a certain level or more, the control unit (2) averages the pixel values excluding pixels that are brighter than a predetermined value.

11. The image forming device (1) according to claim 9,
wherein, when creating the shading correction table in which the pixel values are averaged in the width based on the cycle, the control unit (2) averages the pixel values excluding pixels having abnormal values from the pixels within the range to be averaged.

12. The image forming device (1) according to claim 11,
wherein the pixels having the abnormal values are pixels in a region including discharge failure due to nozzle failure in the test chart (8).

13. The image forming device (1) according to claim 11,
wherein the pixels having the abnormal values are pixels in a region including printing failure due to nozzle landing abnormality in the test chart (8).

14. The image forming device (1) according to claim 11,
wherein the pixels having the abnormal values are pixels in a region including printing failure due to liquid amount abnormality in the test chart (8).

15. The image forming device (1) according to claim 11,
wherein the pixels having the abnormal values are pixels in a region including dirt in the test chart (8).

16. The image forming device (1) according to claim 11,
wherein the pixels having the abnormal values are pixels in a region including an end portion of the recording medium (7) in the test chart (8).

17. The image forming device (1) according to any one of claims 1 to 16,
wherein the control unit (2) performs correction by applying a gradation mask on a connection of shading correction.

18. The image forming device (1) according to any one of claims 1 to 17,
wherein the image reading unit (6) comprises a line sensor (61) arranged so that the conveyance direction of the recording medium (7) is a longitudinal direction.

19. The image forming device (1) according to any one of claims 1 to 18,
wherein the recording medium (7) has a structure with a gap between yarns.

20. A shading correction method of an image forming device (1) comprising:
a conveyance unit (4) that conveys a recording medium (7);
a recording head unit (5) that prints an image on the recording medium (7) by an inkjet head (51) that discharges ink from a plurality of nozzles;
an image reading unit (6) that optically reads the recording medium (7); and
a control unit (2) that controls the recording head unit (5), the conveyance unit (4), and the image reading unit (6),
wherein the control unit (2) performs steps of
selectively operating the plurality of nozzles of the inkjet head (51) on the basis of test chart data to print a test chart (8) on a part of the recording medium (7),
causing the image reading unit (6) to read a region on the recording medium (7) on which the test chart (8) is printed and a region in a non-printing state,
performing frequency analysis on an image obtained by reading the recording medium (7) in the non-printing state to calculate a cycle of density unevenness of the recording medium (7) that occurs in the non-printing state,
analyzing an image of the test chart (8) in units of width based on the cycle, and creating a shading correction table,
correcting image data on the basis of the shading correction table, and
selectively operating the plurality of nozzles of the inkjet head (51) to print image data corrected on the recording medium (7).

21. A shading correction program (241) for causing a computer to perform processes, the computer comprising:
a conveyance unit (4) that conveys a recording medium (7);
a recording head unit (5) that prints an image on the recording medium (7) by an inkjet head (51) that discharges ink from a plurality of nozzles; and
an image reading unit (6) that optically reads the recording medium (7),
the processes including
selectively operating the plurality of nozzles of the inkjet head (51) on the basis of test chart data to print a test chart (8) on a part of the recording medium (7),
causing the image reading unit (6) to read a region on the recording medium (7) on which the test chart (8) is printed and a region in a non-printing state,
performing frequency analysis on an image obtained by reading the recording medium (7) in the non-printing state to calculate a cycle of density unevenness of the recording medium (7) that occurs in the non-printing state,
analyzing an image of the test chart (8) in units of width based on the cycle, and creating a shading correction table,
correcting image data on the basis of the shading correction table, and
selectively operating the plurality of nozzles of the inkjet head (51) to print image data corrected on the recording medium (7).
